# EUROPEAN PATENT SPECIFICATION

(11) **EP 0 705 517 B1**
(45) Date of publication and mention of the grant of the patent: **17.10.2001**
(21) Application number: 94914827.4
(22) Date of filing: 18.04.1994
(51) Int. Cl.: H04N 5/262, H04N 5/265

(54) **MEDIA PIPELINE WITH MULTICHANNEL VIDEO PROCESSING AND PLAYBACK**
MEDIEN PIPELINE MIT MEHRWEGEVIDEOVERARBEITUNG UND WIEDERGABE
PIPELINE POUR SIGNAUX VIDEO PERMETTANT UN TRAITEMENT ET UNE REPRODUCTION VIDEO MULTICANAL

(30) Priority: 16.04.1993 GB 9307894
(43) Date of publication of application: 10.04.1996
(60) Divisional application: 01102495.7
(73) Proprietor: AVID TECHNOLOGY, INC., Tewksbury, MA 01876 (US)
(72) Inventor: KURTZE, Jeffrey, Nashua, NH 03062 (US); CACCIATORE, Ray, Westford, MA 01886 (US); ZAWOJSKI, Peter, Merrimack, NH 03054 (US); PETERS, Eric, C., Carlisle, MA 01741 (US); WALSH, John, Jr., North Chelmsford, MA 01863 (US)
(74) Representative: Garratt, Peter Douglas
(86) International application number: US9404253
(87) International publication number: WO9424815

(56) References cited:
- EP-A- 0 480 625
- WO-A-90/13876
- GB-A- 2 260 458
- US-A- 4 698 682
- US-A- 5 220 425
- PATENT ABSTRACTS OF JAPAN vol. 15, no. 351 (E-1108) 5 September 1991 & JP,A,03 136 480 (DAINIPPON PRINTING CO LTD) 11 June 1991
- IEEE GLOBAL TELECOMMUNICATIONS CONFERENCE, 6 December 1992, ORLANDO, FLORIDA, USA pages 245 - 249, XP000357793 ZON-YIN SHAE, MON-SONG CHEN 'Mixing and Playback of JPEG Compressed Packet Videos'

## Description

### Background of the Invention

Technology for manipulating digital video has progressed to the point where it can be readily processed and handled on computers. For example, the Avid/l Media Composer, available from Avid Technology, Inc. of Tewksbury, Massachusetts, is a system wherein digital video can be readily captured, edited, and displayed for various purposes, such as broadcast television and film and video program post-production.

The Avid/l Media Composer uses a media pipeline to provide real-time digital video output on a computer display. This media pipeline 30 is shown in Fig. 1 and is described in more detail in U.S. Patent No. 5,045,940, issued September 3, 1991. In this media pipeline 30, a permanent storage 40 stores sequences of digital still images which represent digital video and are played back at a rate which provides the appearance of video. The sequences of digital still images do not include any frame synchronization or other type of timing information which are typically found in television signals. The still images also typically are stored in compressed form. The stored sequences are accessed and placed in a data buffer 42 from where they are provided to a compression/decompression system 44. The output of the compression/decompression system 44 is applied to a frame buffer 46 which converts the still image to a typical video signal which is then applied to an input/output unit 48. Each of the systems 40, 42, 44, 46, and 48 in this media pipeline 30 operate bi-directionally. That is, the output process discussed above can be reversed and video signals can be input via input/output unit 48 to the frame buffer 46 where they are converted to a sequence of digital still images. The images in the sequence are compressed by compression/decompression system 44, stored in data buffer 42 and then transferred to the permanent storage 40.

Although the media pipeline provides many advantages for digital video, including enabling broadcast and editing from the stored digital images in a computer system, this media pipeline is not able to provide real-time digital video effects including complex arbitrary three-dimensional effects, simple, two-dimensional effects such as resizing, x-y translation, rotating, layering (an appearance of picture-in-picture), and finally simple effects such as dissolves, wipes, fades and luma and/or chroma keying. In order to perceive such effects on the computer, the effect generally is first generated (not in real time), then digitized and stored if generated on a tape and finally played back.

US-A-4698682 describes an apparatus for smoothing motion in a computerised graphics system by dissolving from one video signal to another rather than effecting a hard switch between video signals.

EP-A-480 625 discloses a device for interpolating video frames, for example in an animated sequence, by blending colour values of adjacent frames.

The invention is set out in the independent claims to which reference should be made. Preferred embodiments are defined in the dependent claims.

### Brief Description of the Drawing

In the drawing,
Fig. 1 is a block diagram of a media pipeline as is used in the prior art;
Fig. 2 is a block diagram of a modified media pipeline in accordance with the present invention;
Fig. 3 is a more detailed block diagram of a modified compression/decompression subsystem of the media pipeline in accordance with the present invention;
Fig. 4 is a block diagram of a modified media pipeline in accordance with the present invention to provide real time digital video effects;
Fig. 5 is a block diagram of the α generator for box wipes;
Fig. 6 is a flow chart describing the operation of a state machine for each scan line in a frame for a box wipe;
Fig. 7 is a flow chart describing the operation of a state machine for each pixel in a scan line for a box wipe; and
Fig. 8 is a diagram showing how α is determined for different regions of an image for a box wipe.

### Detailed Description

The present invention will be more completely understood through the following detailed description which should be read in conjunction with the attached drawing in which similar reference numbers indicate similar structures. All references cited herein, including pending patent applications, are hereby expressly incorporated by reference.

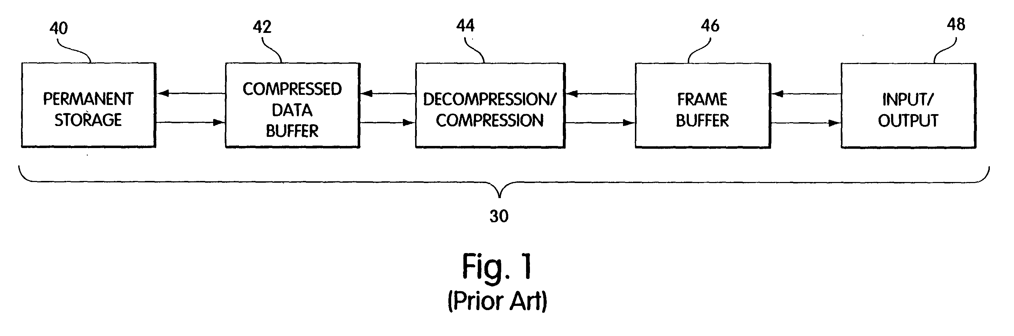

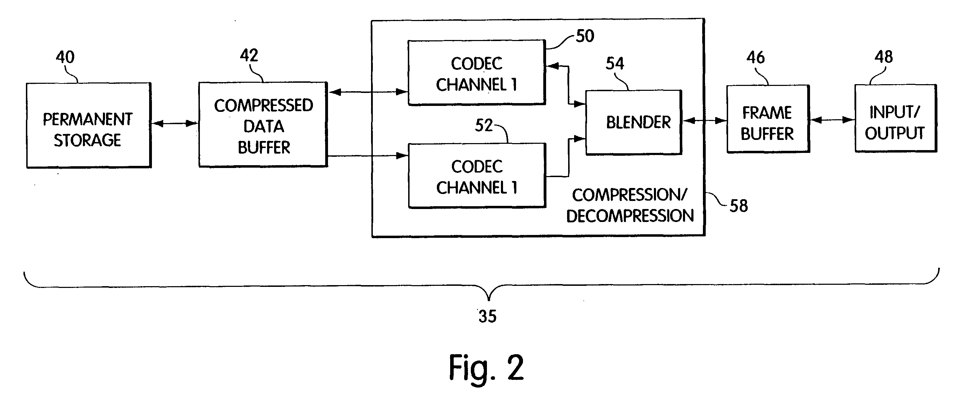

A media pipeline 35 with two channels of digital video for providing effects will now be described in connection with Fig. 2. The media pipeline 30 shown in Fig. 1 is modified to include a compression/decompression (CODEC) unit 58 which is a modification of compression/decompression system 44 of Frg. 1. The CODEC unit 58 has two CODEC channels 50 and 52. One is used for compression and decompression, i.e., for both recording and playback, while the other is used only for playback. The outputs of these channels are fed to a blender 54 which combines them according to the desired effect. It is not necessary to use compressed data; however, compression is preferable to reduce storage requirements. This compression/decompression unit 58 is described in more detail in British provisional specification 9307894.7, filed April 16, 1993, under U.S. foreign filing license 504287 granted April 13, 1993.

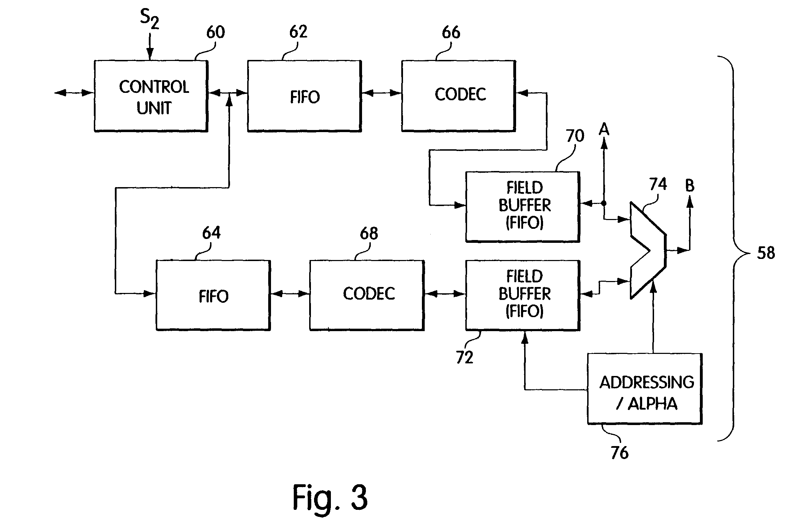

This CODEC unit 58 will now be described in more detail in connection with Fig. 3. In this figure, a control unit 60 controls two channels of coder/decoders. The modification to the media pipeline 30 is made by assigning, in the control unit 60, different sections of the compressed data buffer 42 to each channel. A sequence of digital still images is also assigned to a channel. Thus, when the sequence is read into the compressed data buffer 42, it is input to the section assigned to the channel for that sequence. Thus, reading and writing of data into the FIFO 62 and 64 for the CODECs 66 and 68 is based on the assignment of a channel to a selected sequence of digital still images.

Each channel has a separate CODEC, either a first CODEC 66 or a second CODEC 68. The CODECs typically use the Joint Photographic Expert Group (JPEG) proposed standard for still image compression. Such CODECs are commercially available, such as the CL550 available from C-Cube of Milpitas, California. Each CODEC has a respective first-in, first-out (FIFO) memory elements 62 and 64. The FIFO memory elements 62 and 64 feed respectively to the CODECs 66 and 68 of which the outputs are applied to field buffers 70 and 72, which are also preferably FIFO memory elements. These two channels may be blended using a blender 74 which is controlled by an addressing and alpha information unit 76, as will be described in more detail below. The blender 74 and alpha and addressing information unit 76 are preferably implemented using a field reprogrammable gate array such as the XC3090 manufactured by XiLinx.

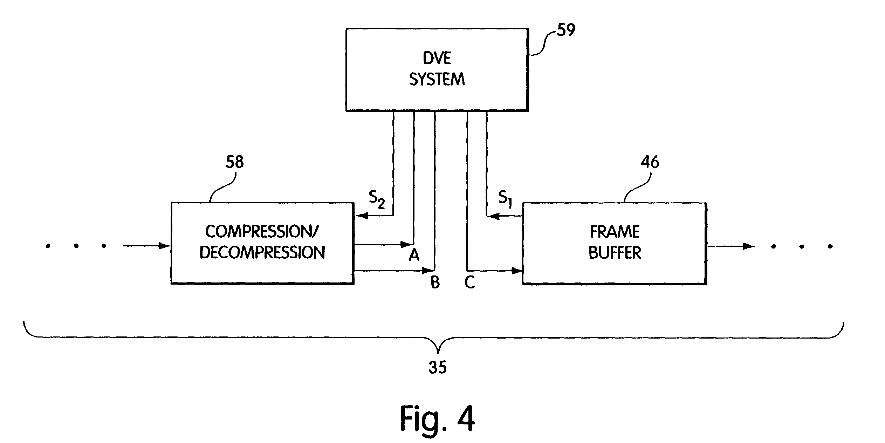

Alternatively, a first output sequence may be provided by output A from the FIFO 70 for CODEC 66, and a second output sequence may then be provided by the output of the blender, when no blending is performed, as the output B. Thus, FIFO 70 and blender 74 act as first and second sources of sequences of digital still images. The outputs A and B may be applied to a digital video effects system 59 as shown in Fig. 4. This embodiment is useful for providing arbitrary three-dimensional video effects, as are described in U.S. patent application entitled Media Pipeline with Mechanism for Real-Time Addition of Digital Video Effects filed March 18, 1994 by Harry Der et al., and assigned to Avid Technology, Inc. of Tewksbury, Massachusetts.

More complex, two-dimensional effects can also be made using techniques known in the art, including X-Y translation, rotation and scaling. An additional effects board, similar to that for the three-dimensional, arbitrary effects, can be provided so as to perform an operation on a single stream. To provide this operation, the output A as shown in Fig. 4 is applied to such an effects generator, the output of which would be applied to the input of the blender originally designed to receive channel A. When this capability is provided, the digital effects typically produce an output using the YUV data format with four bits for each of the Y, U and V parameters (4:4:4). In contrast, the normal data format for channels A and B is 4:2:2. Thus, in this instance, the blender 76 should be designed so as to optionally process channel A for either 4:4:4 format or 4:2:2 format, according to whether such digital effects are being provided.

Provision of simpler video effects in real time, such as box wipes and chroma and luma keys, using blender 74 and alpha and addressing information 76, will now be described. Blending of two streams (A and B) of video typically involves the application of the function αA + (1-α)B to the streams of video information, where α is a value which can vary from pixel to pixel in an image, and where A and B, at any given point in time, are pixels in corresponding frames in the two streams (A and B) of video. Each effect is thus applied to one frame from each of the two streams. (One normally does not perform an effect on only a fraction of a frame). Given α, at any point in time and the addresses for pixels A and B, the output image can be generated. The blender 74 which performs this operation be determining the result of the combination αA + (1-α)B can be implemented using standard digital hardware design techniques. Preferably, a field reprogrammable gate array is used to implement the function (A-B)α + B.

The value of α applied to two pixels is dependent upon the kind of effect to be provided. For example, dissolves uses the same α for for all pixels in one frame. α is gradually decreased for subsequent frames in the dissolve. The pair of pixels to be combined is also dependent upon the kind of effect to be provided. The indication of which pair of pixels to use is called the addressing information. For each kind of effect to be provided, a state machine and state variables can be defined for processing one frame of output video. The two general types of effects are chroma and/or luma keys and box wipes, which include dissolves and fades.

For example, in order to implement chroma and/or luma keying, two threshold values D1 and D2 and a key point Kc are defined by the user for each parameter of a pixel. These effects are typically applied to the YUV representation of an image. Thus, an incoming image is processed by comparing the pixel Y, U and V values to the key points and threshold values defined for Y, U, and V. In particular, using the parameter U as an example, ∥Kc-U∥ is calculated. If this value is less than D1, α is set to be the maximum possible value. If this value is greater than D2, α is set to be the minimum possible value. When the value is somewhere between D1 and D2, a value for α is determined according to this value. In one embodiment of the invention, D1-D2 is required to be some fixed number, e.g., 16. The magnitude of this fixed number represents the desired number of α. In this embodiment, when the value of ∥Kc-U∥ is between D1 and D2, the value ∥Kc-U∥-D1 is applied to a lookup table (stored in a random access, preferably rewritable, memory), which stores corresponding values of α to be used. The values of α may be any function of the input ∥Kc-U∥-D1, such as a step function, a sigmoid function, a ramp or any function desired by a user. Typically, only Y or U,V are keyed and processed. One could apply keying to all of Y, U and V at once, and combine the resulting α values, for example, by using the function (1/2(αᵤ+αᵥ) AND α_{y}).

Box wipes with a border can also be provided. A box wipe is a transition between two streams defined by a rectangular shape. Within the rectangle, information from one channel is provided. Outside the rectangle, information from the other channel is provided. The transition region can be strictly defined by the border of the rectangle or a border color can be provided. The transition can be described as a linear ramp (defined by a ratio of the channels to each other). The transition is thus defined by the lower and upper limits of the ramp, the step size, and the duration. All of these parameters should be user definable. Also, the coordinates of the box should be programmable to provide a horizontal wipe, a vertical wipe, or some corner to corner wipe. Typically, a blend is performed from the first channel to the border, from the border to the next channel, or among both channels. A state machine can readily be defined according to the variables defining the wipe so as to provide an output α value for each pair of pixels to be combined. There are three values used to define the final α. The αᵢₙᵢₜ values define the initial α_{X} and α_{Y} values, where α_{X} and α_{Y} are accumulated values according to the state machine. In the simplest wipe, a dissolve, the initial values are held, i.e., not changed, throughout a whole frame. In the other box wipes, α_{X} and α_{Y} may change, according to the desired wipe. In this process, the final α value is typically taken to be α_{X}, subject to a limiting function defined by α_{Y}. That is, the final α typically is α_{X} when α_{X} is less than α_{Y} and typically is α_{Y} when α_{X} is greater than α_{Y}.

A wipe is defined by two sets of parameters. The first set is parameters for the X direction in a frame; the second set is parameters for the Y direction, defining changes between scan lines in the effect. Both of the X and Y parameters include four groups of four parameters, each group representing an operation, including offset, control, interval, and delta information. The offset information defines where blending is to begin. In the X direction, it identifies the pixel in the scan line where the first blend begins. In the Y direction, it identifies the scan line where blending is to begin. The next information is control information identifying whether further operations in the scan line, or in the frame will follow. For the X parameter, this control information is represented by two bits, wherein the first bit represents whether video is swapped between the A and B channels. The other bit indicates whether another operation in the X direction will appear. After the control information is the interval over which the blend is to be performed. The interval either identifies the number of scan lines or a number of pixels within one scan line. Finally, the delta information represents an increment to be added to α_{X} or α_{Y} for each pixel over the defined interval.
Thus, a wipe is defined by four groups of four operations in each of the X and Y directions. The first operation signifies the transition from channel A to the border; the second from the border to the second channel; the third from the second channel to the border; and the fourth from the border to the first channel. If there is no border, only two operations are used and the second operation indicates that there is no further operation to be performed either for the scan line or for the frame.

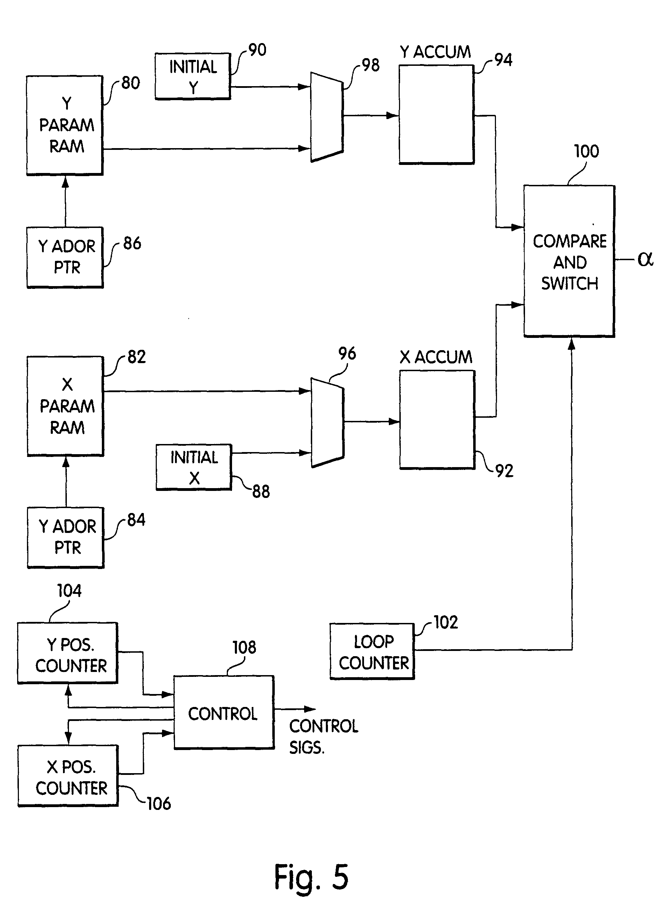

Given the operations defining the wipe to be performed, including the four groups of operational information for each of the X and Y parameters, a state machine can be used to determine α for each pixel in the frame. These state machines will now be described in connection with Figs. 5 through 8.

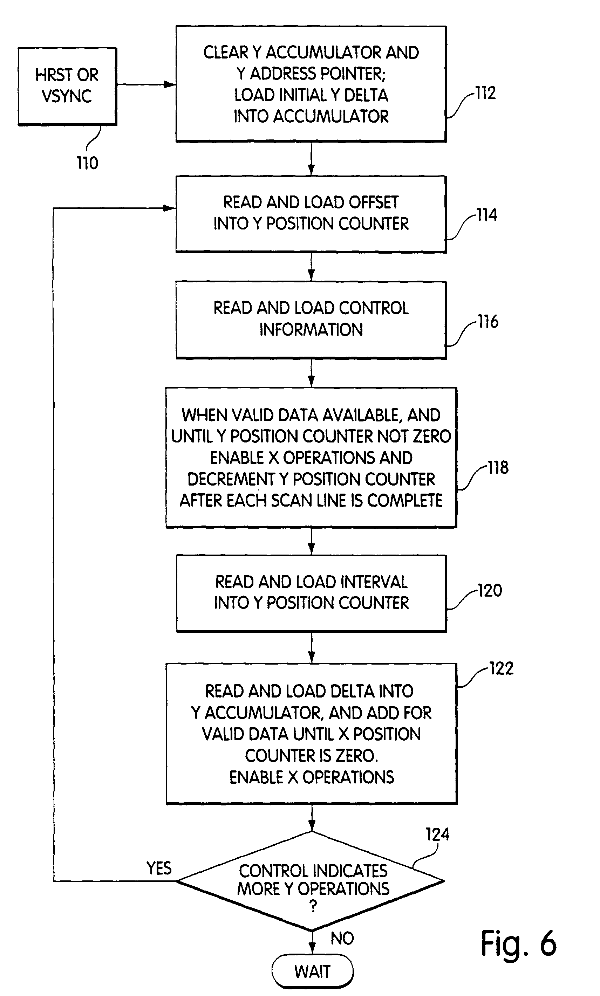

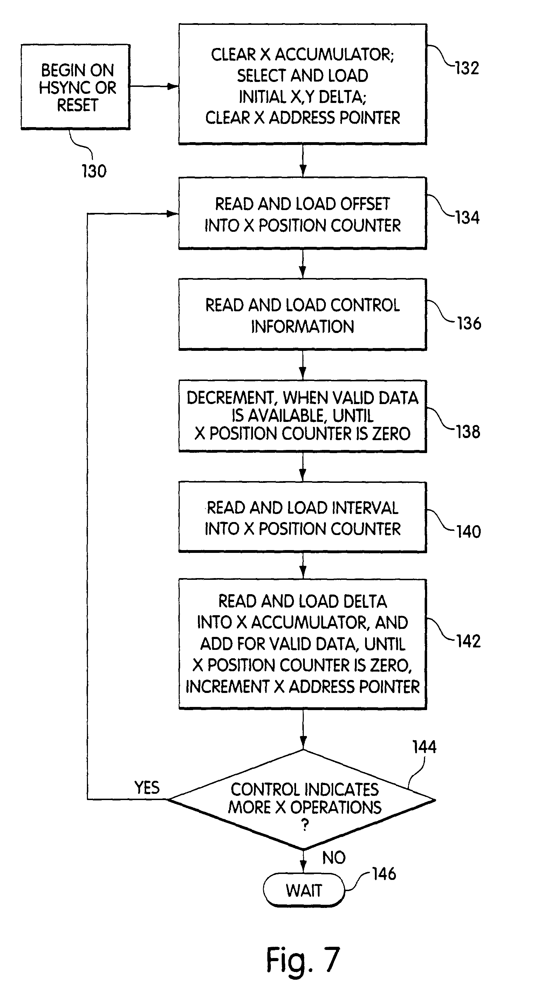

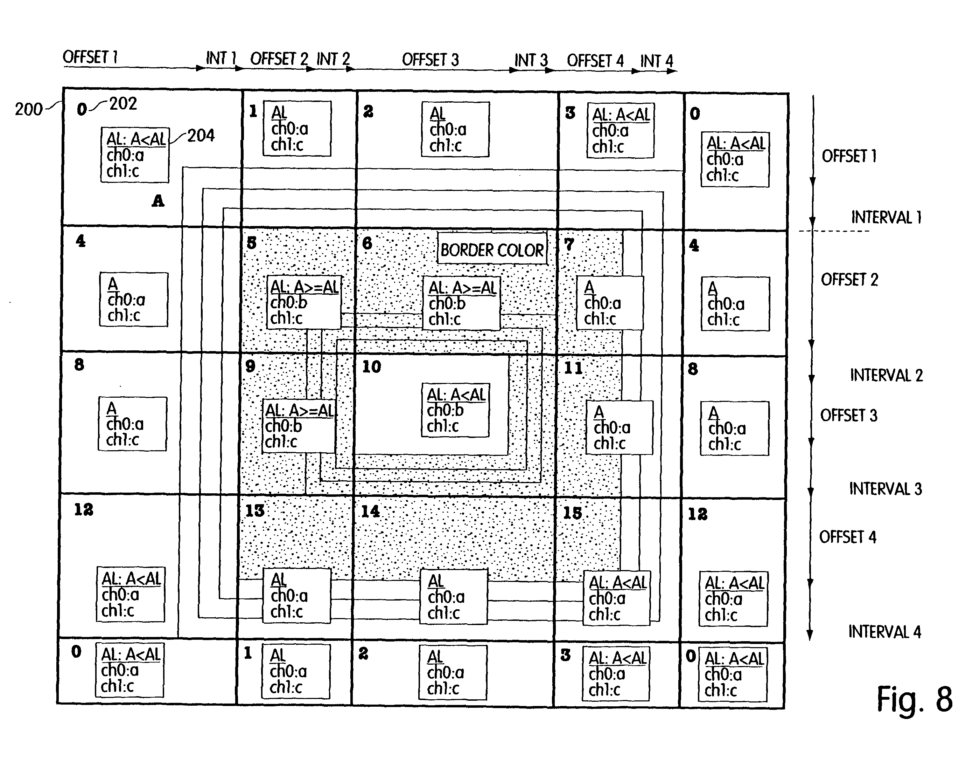

Fig. 5 is a block diagram illustrating some structures controlled by a state machine. The state machine's operation will be described in connection with the flow charts of Figs. 6 and 7. In Fig. 5, X parameter memory 82 and Y parameter memory 80 store the operations to be performed. An address pointer is stored in registers 84 and 86 for each of these memories as X and Y address pointers. Initial X and Y delta values are also stored in registers 88 and 90. These are fed to accumulators for the X and Y values 92 and 94 via switches 96 and 98. The output of the accumulators 94 and 92 are fed to compare and switch unit 100, the output of which provides the α value in a manner to be described below in connection with Fig. 8. There is also a loop counter 102 which indicates the part of frame on which the effect is being performed. The significance of this will also be discussed further below in connection with Fig. 8. There is also a Y position counter 104 and an X position counter 106 which are used by the control 108 which operates in accordance with the flow charts of Figs. 6 and 7.

Figs. 6 and 7 will now be described.

Upon a horizontal reset (HRST) or vertical sync (VSYNC), as indicated at step 110, the Y accumulator 94 and Y address pointer 86 are cleared. An initial Y delta value 90 is loaded then into the accumulator 94 via switch 98 (step 112). An offset is then read from the Y parameter memory 80 into the Y position counter 104 (step 114). Control information is then read from the Y parameter memory 80 into the loop counter 102 (step 116).

When valid data is available to be processed, and until the Y position counter 104 is not zero, operations on a scan line are performed in step 118 as will be discussed below in connection with Fig. 7. After each scan is processed, the Y position counter 104 is decremented. When the Y position counter reaches zero, the interval is read and loaded from parameter memory 80 into the Y position counter 104 (step 120). A delta value is then read from the Y parameter memory 80 into the Y accumulator 94 and is added to the current value therein (step 122). This value is added for each scan line until the Y position counter is then zero. Each scan line is processed in accordance with the steps described below in connection with Fig. 7. When the Y position counter 104 is zero, the control information is examined in step 124 to determine if further Y operations are to be performed. If there are further operations to be performed, processing returns to step 114. Otherwise, the system waits until another horizontal reset or vertical sync occurs.

Operaticns on one scan line will now be described in connection with Fig. 7. These operations begin in step 130 upon the receipt of a horizontal sync or reset. In step 132, the X accumulator 92 and X address pointer 84 are cleared and an initial delta value at 88 is then loaded into the X accumulator 92 via switch 96. An offset is then loaded from the X parameter memory 82 in step 134 into the X position counter 106. Next control information is read from the X parameter memory 82 into loop counter 102 in step 136. The X position counter is decremented when valid data is available, until the X position counter 106 is zero (step 138). The interval is then read from X parameter memory 82 into X position counter 106 in step 140. The delta value is then read from X parameter memory 82 into the X accumulator 92 and is added to the current value in the accumulator 92 until the X position counter is zero (step 142). The X address pointer and Y address pointer are incremented along this process to identify the correct operation. If the control information indicates that more X operations are to be performed, as determined in step 144, processing returns to step 134. Otherwise, the system waits in step 146 until another horizontal sync or reset occurs.

For each pixel in the scan line, as indicated by each decrement operation on the X position counter 106, an α value is output from the compare and switch unit 100. How this operation is provided was discussed above. Further details for more complicated box wipes in this selection will now be provided in connection with Fig. 8.

As indicated in Fig. 5, the compare and switch unit 100 receives an α_{Y} value from the Y accumulator 94 and α_{X} value from X accumulator 92 and a loop counter 102. The loop counter indicates which quadrant in a box wipe with a border is being processed. The indication of a quadrant can readily be determined by the status of the state machine and a counter. Because the X operations and Y operations are each defined by four groups of four parameters, wherein each group identifies an operation to be performed when a portion of an image, there are precisely sixteen combinations of X parameters and Y parameters, each identifying a quadrant of the resulting image. The α value for each quadrant has a predetermined relationship with the α_{X} and α_{Y} values. Thus, according to the loop control 102, the appropriate selection among α_{X} and α_{Y} can be provided.

The relationships of α to α_{X} and α_{Y} for each quadrant will now be described in connection with Fig. 8.

Fig. 8 illustrates 25 regions of a box wipe with a border and transitions between one image, a border color, and another image. There are fifteen general types of regions to be considered in this effect, each being numbered accordingly in the upper left hand corner of the box. For example, the first region 200 is labelled zero as indicated at 202. A box 204 is shown in each region identifying the source of image data (where CH0 corresponds to the channel applied to input A of the blender 76 and CH1 corresponds to the input applied to input B of the blender). The first line in box 204 indicates the α value to be provided to the blender. "A" indicates that α_{X} is supplied as α, as in regions 4, 7, 8 and 11. "AL" indicates that α_{Y} is supplied as the α value, as in regions 1, 2, 13 and 14. "AL:A < AL" indicates that α_{X} is provided when it is less than α_{Y} and α_{Y} is provided otherwise, as in regions 0, 3, 10, 12 and 15. "AL: > = AL" indicates that α_{Y} is provided unless α_{X} is greater than α_{Y} when α_{X} is provided, as in regions 5, 6, and 9.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalents thereto.

## Claims

1. A device for processing first and second sequences of digital still images defining motion video to provide digital video effects, comprising:
a first buffer (62, 70) for receiving, storing and communicating digital video information defining the first sequence of digital still images;
a second buffer (64, 72) for receiving, storing and communicating digital video information defining the second sequence of digital still images;
a first controller (60) for receiving and directing digital video information defining the first and second sequences of digital still images to one of the first and second buffers respectively;
a digital blender (54) having a first input connected to receive digital video information from the first buffer, a second input connected to receive digital video information from the second buffer and an output providing processed digital video information based on pixels of said first and second sequences of digital still images; and
means (46, 48) for outputting the processed digital video information as a video signal.

2. The device of Claim 1, including a frame buffer (46) having an input connected to the output of the blender (54) and an output connected to the input of a video output device (48) to communicate the digital video information output by the blender (54) to the video output device (48).

3. The device of any preceding claim, wherein each of the first and second buffers is a first-in, first-out memory circuit.

4. The device of any preceding claim, wherein each of the first and second buffers comprises an input for receiving compressed digital still images into a first buffer memory (62, 64), a decompression circuit (66, 68) having an input for receiving the compressed digital still images and an output providing decompressed digital still images to a second buffer memory (70, 72), wherein the second buffer memory communicates the decompressed digital still images to the blender.

5. The device of Claim 4, wherein the decompression circuit (66, 68) is a circuit which receives and decompresses images compressed according to JPEG standard.

6. The device of any preceding claim, wherein the first buffer is connected to a first input of a digital video effects system (59) and the output of the blender is connected to a second input of the digital video effects system and the output of the digital video effects system is connected to a frame buffer, wherein the blender (54) is programmable so as to communicate the sequence of digital still images of the second buffer to the output of the blender without blending with the sequence of digital still images of the first buffer.

7. The device of Claim 1, wherein the controller in the blender comprises an addressing and alpha information unit (76) which receives an indication of an effect to be performed and provides a value cc to the blender for each pair of pixels to be blended according to the indicated effect, wherein the blender performs a blending function of a first pixel A from the first channel and a second pixel B from the second channel such that the output of the blender is ∝ A + (1-∝)B.

8. The device of any preceding claim arranged to address the first and second buffers according to scan lines and whether valid data is available.

9. The device according to any preceding claim, adapted to perform dual stream real-time processing of said first and second sequences, said first and second sequences being stored on a permanent storage medium (40).

10. The device according to any preceding claim, wherein the controller (60) comprises means for specifying a sequence of segments of said first and second sequences which are to to be directed to the first and second buffers (62, 70; 64, 72).

11. A method for blending first and second sequences of digital still images to create a third sequence of digital still images comprising the steps of:
periodically transferring pixel data of images from the first and second sequences into first and second buffer circuits;
receiving an indication of a blend operation to be performed on the images;
sequentially reading corresponding pairs of pixels of each of the images from the first and second sequences from the first and second buffer circuits;
selecting a blending factor according to the indicated blend operation and a relative position of a combination of the selected pixels in the desired output image; and
blending the selected pixels according to the selected factor to generate pixels in the image of the third sequence desired output.

12. The method of Claim 11, wherein the step of blending includes addressing the first and second buffers according to scan lines and whether valid data is available.

## Patentansprüche

1. Vorrichtung zur Verarbeitung erster und zweiter Sequenzen von digitalen Standbildern, die ein Bewegtvideo definieren, um digitale Videoeffekte bereitzustellen, umfassend:
einen ersten Puffer bzw. Pufferspeicher (62, 70), um digitale Videoinformation, die die erste Sequenz von digitalen Standbildern definiert, zu empfangen, zu speichern und zu übertragen;
einen zweiten Puffer bzw. Pufferspeicher (64, 72), um digitale Videoinformation, die die zweite Sequenz von digitalen Standbildern defmiert, zu empfangen, zu speichern und zu übertragen;
einen ersten Controller bzw. Steuereinheit (60), um digitale Videoinformation, die die ersten und zweiten Sequenzen von digitalen Standbildern definiert, zu empfangen und entweder an den ersten oder an den zweiten Pufferspeicher weiterzuleiten;
einen digitalen Mischer (54), dessen erster Eingang geschaltet ist, um digitale Videoinformation von dem ersten Pufferspeicher zu empfangen, dessen zweiter Eingang geschaltet ist, um digitale Videoinformation von dem zweiten Pufferspeicher zu empfangen, und mit einem Ausgang, der verarbeitete digitale Videoinformation bereitstellt, die auf Pixeln bzw. Bildpunkten der ersten und zweiten Sequenzen von digitalen Standbildern basiert; und
Einrichtungen (46, 48), um die verarbeitete digitale Videoinformation als Videosignal auszugeben.

2. Vorrichtung nach Anspruch 1, die einen Vollbildpufferspeicher (46) umfasst, dessen Eingang mit dem Ausgang des Mischers (54) verbunden ist und dessen Ausgang mit dem Eingang eines Videoausgabegeräts (48) verbunden ist, um die von dem Mischer (54) ausgegebene digitale Videoinformation an das Videoausgabegerät (48) zu übertragen.

3. Vorrichtung nach irgendeinem vorhergehenden Anspruch, bei der der erste und der zweite Pufferspeicher eine FIFO-Speicherschaltung (first-in, first-out) ist.

4. Vorrichtung nach irgendeinem vorhergehenden Anspruch, bei der der erste und der zweite Pufferspeicher einen Eingang, um komprimierte digitale Standbilder in einen ersten Pufferspeicher (62, 64) zu empfangen, und eine Entkomprimierungsschaltung (66, 68) umfasst, die einen Eingang, um die komprimierten digitalen Standbilder zu empfangen, und einen Ausgang aufweist, der die entkomprimierten digitalen Standbilder einem zweiten Pufferspeicher (70, 72) zur Verfügung stellt, wobei der zweite Pufferspeicher die entkomprimierten digitalen Standbilder an den Mischer übermittelt.

5. Vorrichtung nach Anspruch 4, bei der die Entkomprimierungsschaltung (66, 68) eine Schaltung ist, die Bilder empfängt und entkomprimiert, die nach dem JPEG-Standard komprimiert sind.

6. Vorrichtung nach irgendeinem vorhergehenden Anspruch, bei der der erste Pufferspeicher mit einem ersten Eingang eines digitalen Videoeffektsystems (59) verbunden ist und der Ausgang des Mischers mit einem zweiten Eingang des digitalen Videoeffektsystems verbunden ist und bei der der Ausgang des digitalen Videoeffektsystems mit einem Vollbildpufferspeicher verbunden ist, wobei der Mischer (54) so programmierbar ist, um die Sequenz von digitalen Standbildern des zweiten Pufferspeichers an den Ausgang des Mischers ohne Vermischung mit der Sequenz von digitalen Standbildern des ersten Pufferspeichers zu übermitteln.

7. Vorrichtung nach Anspruch 1, bei der der Kontroller in dem Mischer eine Adressierund Alpha-Informationseinheit (76) umfasst, die eine Meldung eines auszuführenden Effekts empfängt und dem Mischer für jedes paar von zu mischenden Pixeln bzw. Bildpunkten einen Wert α in Entsprechung zu dem gemeldeten Effekt bereitstellt, wobei der Mischer eine Mischfunktion eines ersten Pixels bzw. Bildpunkts A von dem ersten Kanal und eines zweiten Pixels bzw. Bildpunkts B von dem zweiten Kanal so ausführt, dass das Ausgangssignal des Mischers αA + (1-α)B ist.

8. Vorrichtung nach irgendeinem vorhergehenden Anspruch, die ausgelegt ist, um den ersten und zweiten Pufferspeicher in Entsprechung zu Abtastzeilen zu adressieren und in Abhängigkeit davon, ob gültige Daten verfügbar sind.

9. Vorrichtung nach irgendeinem vorhergehenden Anspruch, die ausgelegt ist, um eine Zweistrom- bzw. Zweikanalverarbeitung (dual stream) der ersten und zweiten Sequenzen in Echtzeit auszuführen, wobei die ersten und zweiten Sequenzen auf einem permanenten Speichermedium (40) gespeichert sind.

10. Vorrichtung nach irgendeinem vorhergehenden Anspruch, bei der der Controller (60) bzw. Steuereinheit Einrichtungen umfasst, um eine Sequenz von Segmenten der ersten und zweiten Sequenzen zu spezifizieren, die an den ersten und zweiten Pufferspeicher (62, 70; 64, 72) weitergeleitet werden sollen.

11. Verfahren zum Mischen von ersten und zweiten Sequenzen von digitalen Standbildern, um eine dritte Sequenz von digitalen Standbildern zu erzeugen, mit den folgenden Schritten:
Pixel- bzw. Bildpunktdaten von Bildern von den ersten und zweiten Sequenzen werden periodisch in erste und zweite Pufferschaltungen übermittelt;
es wird eine Meldung für eine Mischoperation empfangen, die an den Bildern ausgeführt werden soll;
entsprechende Paare von Pixeln bzw. Bildpunkten von jedem der Bilder aus den ersten und zweiten Sequenzen werden sequenziell aus den ersten und zweiten Pufferschaltungen gelesen;
es wird ein Mischfaktor in Entsprechung zu der gemeldeten Mischoperation und einer Relativposition einer Kombination bzw. Verknüpfung der ausgewählten Pixel in dem gewünschten Ausgangsbild gewählt; und
die ausgewählten Pixel werden in Entsprechung zu dem gewählten Faktor gemischt, um Pixel bzw. Bildpunkte in dem Bild der gewünschten dritten Sequenzausgabe zu erzeugen.

12. Verfahren nach Anspruch 11, bei dem der Schritt des Mischens eine Adressierung der ersten und zweiten Pufferspeicher in Entsprechung zu Abtastzeilen und in Abhängigkeit davon, ob gültige Daten verfügbar sind, umfasst.

## Revendications

1. Dispositif pour le traitement de première et seconde séquences d'images immobiles numériques définissant la vidéo cinématographique pour fournir des effets vidéo numériques, comprenant :
un premier tampon (62,70) pour recevoir, mémoriser et communiquer des informations vidéo numériques définissant la première séquence d'images immobiles numériques;
un second tampon (64,72) pour recevoir, mémoriser et communiquer des informations vidéo numériques définissant la seconde séquence d'images immobiles numériques;
un premier organe de commande (60) pour recevoir et diriger les informations vidéo numériques définissant les première et seconde séquences des images immobiles numériques respectivement vers l'un des premier et second tampon;
un mélangeur numérique (54) ayant une première entrée connectée pour recevoir des informations vidéo numériques en provenance du premier tampon, une seconde entrée connectée pour recevoir des informations vidéo numériques en provenance du second tampon et une sortie fournissant des informations vidéo numériques traitées basées sur les pixels desdites première et seconde séquences des images immobiles numériques; et
des moyens (46,48) pour émettre des informations vidéo numériques traitées en tant que signal vidéo.

2. Dispositif selon la revendication 1, comprenant un tampon d'images (46) ayant une entrée connectée à la sortie du mélangeur (54) et une sortie connectée à l'entrée d'un dispositif de sortie vidéo (48) pour communiquer les informations vidéo numériques émises par le mélangeur (54) au dispositif de sortie vidéo (48).

3. Dispositif selon l'une quelconque des revendications précédentes, dans lequel chacun des premier et second tampons est un circuit de mémoire du type "premier entré - premier sorti" (FIFO).

4. Dispositif selon l'une quelconque des revendications précédentes, dans lequel chacun des premier et second tampons comprend une entrée pour recevoir des images immobiles numériques comprimées dans une première mémoire tampon (62,64), un circuit de décompression (66,68) ayant une entrée pour recevoir les images immobiles numériques comprimées et une sortie fournissant des images immobiles numériques décomprimées à une seconde mémoire tampon (70,72), dans lequel la seconde mémoire tampon communique les images immobiles vidéo décomprimées au mélangeur.

5. Dispositif selon la revendication 4, dans lequel le circuit de décompression (66,68) est un circuit qui reçoit et décomprime les images comprimées selon la Norme JPEG.

6. Dispositif selon l'une quelconque des revendications précédentes, dans lequel le premier tampon est connecté à une première entrée d'un système à effets vidéo numériques (59) et la sortie du mélangeur est connectée à une seconde entrée du système à effets vidéo numériques et la sortie du système à effets vidéo numériques est connectée à un tampon d'images, dans lequel le mélangeur (54) est programmable de façon à communiquer la séquence des images immobiles numériques du second tampon à la sortie du mélangeur sans mélange avec les images immobiles numériques du premier tampon.

7. Dispositif selon la revendication 1, dans lequel l'organe de commande dans le mélangeur comprend une unité d'adressage et d'informations alpha (76) qui reçoit une indication d'un effet à réaliser et fournit une valeur α au mélangeur pour chaque paire de pixels à mélanger selon l'effet indiqué, dans lequel le mélangeur effectue une fonction de mélange d'un premier pixel A à partir du premier canal et d'un second pixel B à partir du second canal de telle sorte que la sortie du mélangeur est α A + (1-α)B.

8. Dispositif selon l'une quelconque des revendications précédentes, apte à adresser les premier et second tampons selon des lignes de balayage et si des données valables sont disponibles.

9. Dispositif selon l'une quelconque des revendications précédentes, apte à effectuer un traitement en temps réel double courant des première et seconde séquences, lesdites première et seconde séquences étant mémorisées sur un support à mémoire permanente (40).

10. Dispositif selon l'une quelconque des revendications précédentes, dans lequel l'organe de commande (60) comprend des moyens pour spécifier une séquence de segments desdites première et seconde séquences qui doivent être dirigées vers les premier et second tampons (62,70;64,72).

11. Procédé pour mélanger des première et seconde séquences d'images immobiles numériques pour créer une troisième séquence d'images immobiles numériques comprenant les étapes consistant à :
transférer périodiquement les données pixels des images des première et seconde séquences dans des premiers et second circuits tampons;
recevoir une indication d'une opération de mélange à réaliser sur les images;
lire séquentiellement les paires correspondantes de pixels de chacune des images des première et seconde séquences provenant des premier et second circuits tampon;
choisir un facteur de mélange selon l'opération de mélange indiquée et une position relative d'une combinaison des pixels choisis dans l'image de sortie souhaitée; et
mélanger les pixels choisis selon le facteur choisi pour générer les pixels dans l'image de la sortie souhaitée de troisième séquence.

12. Procédé selon la revendication 11, dans lequel l'étape de mélange comprend l'adressage des premier et second tampons selon les lignes de balayage et si des données valables sont disponibles.
